# FASCICULE DE BREVET EUROPEEN

(11) **EP 0 952 376 B1**
(45) Date de publication et mention de la délivrance du brevet: **20.10.2004**
(21) Numéro de dépôt: 99400826.6
(22) Date de dépôt: 02.04.1999
(51) Int. Cl.: F16K 1/44

(54) **Vanne à clapets et membrane gonflable**
Doppelsitzventil mit aufblasbarer Membran
Double-seat lift valve with inflatable membrane

(30) Priorité: 21.04.1998 FR 9804974; 30.06.1998 FR 9808330
(43) Date de publication de la demande: 27.10.1999
(73) Titulaire: S.A. Defontaine, 85530 La Bruffière (FR)
(72) Inventeur: Bonnefous, Jean, 44400 Reze (FR); Maraud, Bruno, 44115 Basse Goulaine (FR); Picot, Thierry, 44330 Vallet (FR)
(74) Mandataire: Keib, Gérard

(56) Documents cités:
- EP-A- 0 545 846
- DE-A- 2 818 787
- DE-A- 3 017 084
- GB-A- 2 064 724

## Description

L'invention concerne une vanne à double clapet.

La demanderesse a créé une vanne à clapets comprenant un corps comportant une chambre communiquant avec deux conduits latéraux. Deux clapets superposés sont mobiles dans ladite chambre suivant un axe commun perpendiculaire aux deux conduits latéraux. La partie inférieure de la chambre comporte un premier siège pour le clapet supérieur et un deuxième siège disposé à une certaine distance sous le premier siège, pour le clapet inférieur.

Le corps de la vanne comporte une deuxième chambre disposée sous les deux sièges précités dans laquelle débouche un troisième conduit. Les clapets sont portés chacun par un balancier mobile entre une position dans laquelle le clapet prend appui de façon étanche sur le siège correspondant et une position dans laquelle le clapet est espacé dudit siège. Par ailleurs, le balancier du clapet inférieur comporte un canal interne qui débouche dans un espace compris entre les deux clapets.

Les deux clapets peuvent être déplacés indépendamment l'un de l'autre, en réalisant pour chacun d'eux un battement, lors du nettoyage de la vanne.

Le canal interne ménagé dans le balancier du clapet inférieur permet d'évacuer le liquide de nettoyage vers un collecteur.

La vanne à clapets ci-dessus présente l'inconvénient suivant :

Lorsque les deux clapets sont en position de fermeture en appui sur leur siège, il existe entre les deux sièges, un espace qui communique avec le canal ménagé dans le balancier du clapet inférieur.

Lors de l'ouverture des clapets, l'espace ci-dessus disparaît. Cependant, pendant un instant très court et avant que les clapets n'atteignent leur position d'ouverture complète, l'espace compris entre les deux clapets est mis en communication avec le canal précité.

Il en résulte ainsi une fuite du liquide traversant la vanne par le canal ci-dessus.

GB-A-2 064 724 divulgue par ailleurs une vanne à clapets comprenant un corps comportant une chambre communiquant avec deux conduits latéraux, deux clapets superposés étant mobiles dans ladite chambre (2) suivant un axe commun perpendiculaire aux deux conduits latéraux, la partie inférieure de la chambre comportant un premier siège pour le clapet supérieur et un deuxième siège disposé à une certaine distance du premier siège, pour le clapet inférieur, le corps de la vanne comportant une deuxième chambre disposée sous les deux sièges précités dans laquelle débouche un troisième conduit, les clapets étant portés chacun par un balancier mobile entre une position dans laquelle le clapet prend appui de façon étanche sur le siège correspondant et une position dans laquelle le clapet est espacé dudit siège, le balancier du clapet inférieur comportant un canal interne qui débouche dans un espace compris entre les deux clapets, cet espace comprenant un élément d'étanchéité fermant une chambre dans laquelle débouche une arrivée d'air sous pression, de telle sorte que l'élément d'étanchéité puisse s'appliquer de façon étanche sur le clapet inférieur pour obturer de façon étanche l'entrée dudit canal.

Le but de la présente invention est de remédier aux inconvénients évoqués, en équipant la vanne d'un moyen permettant d'éviter toute fuite de liquide par le canal précité, lors du déplacement des clapets de leur position de fermeture vers leur position d'ouverture.

Suivant l'invention, cette vanne à clapets est caractérisée en ce que:
- les balanciers, et donc les clapets, sont mobiles axialement, respectivement indépendamment l'un de l'autre, et
- l'élément d'étanchéité est une membrane en matière élastique qui, lors de l'ouverture des clapets, est gonflée par l'alimentation en air de la chambre, pour assurer alors ladite étanchéité sur le clapet inférieur.

Ainsi, pour éviter toute fuite de liquide lors du déplacement des clapets vers la position d'ouverture, il suffit d'injecter de l'air sous pression dans la chambre comprise entre les deux clapets pour faire gonfler la membrane et réaliser l'étanchéité recherchée.

On conseille même que le déplacement des balanciers l'un vis-à-vis de l'autre et l'alimentation en air de la chambre, via ladite arrivée d'air, soient coordonnés de manière que la membrane élastique obture l'entrée dudit canal lors du déplacement des clapets vers leur position d'ouverture et lorsque le clapet supérieur et le clapet inférieur sont axialement à la fois rapprochés l'un de l'autre et chacun écartés du siège qui lui correspond.

Selon une version avantageuse de l'invention, ladite chambre fermée par la membrane élastique est ménagée dans la surface inférieure du clapet supérieur, au moins l'une des extrémités de la membrane étant fixée au clapet supérieur.

Selon une première version de l'invention, les deux extrémités de la membrane sont fixées au clapet supérieur.

Selon une autre version de l'invention, l'une des extrémités de la membrane est fixée au balancier du clapet inférieur près de la surface supérieure de celui-ci.

Dans DE-A-3 017 084, la vanne comprend deux clapets fixes en position relative et la membrane intermédiaire (même si elle est fixée au clapet supérieur) n'obture pas le canal interne ménagé dans le clapet inférieur.

Selon une autre caractéristique de l'invention, l'arrivée d'air sous pression qui débouche dans ladite chambre fermée par la membrane est de préférence reliée à un canal axial ménagé dans le balancier du clapet inférieur.

De préférence également, les clapets sont maintenus en position fermée en appui sur leur siège correspondant par des ressorts prenant appui sur les extrémités supérieures des balanciers desdits clapets, l'extrémité supérieure du balancier du clapet inférieur portant un piston mobile dans une chambre cylindrique, une arrivée d'air sous pression étant prévue dans un espace situé sous le piston pour déplacer celui-ci vers la position d'ouverture des clapets.

D'autres particularités et avantages de l'invention apparaîtront encore dans la description ci-après.

Aux dessins annexés donnés à titre d'exemples non limitatifs :
- la figure 1 est une vue en coupe axiale d'une vanne à clapets selon l'invention équipée d'une première version de la membrane gonflable,
- la figure 2 est une vue en coupe axiale partielle, montrant une deuxième version de la membrane gonflable,
- la figure 3 est une vue en coupe axiale partielle, montrant une troisième version de la membrane gonflable,
- la figure 4 est une vue en coupe axiale partielle, montrant une quatrième version de la membrane gonflable,
- la figure 5 est une vue en coupe partielle, montrant une cinquième version de la membrane gonflable,
- la figure 6 est une vue en coupe partielle d'une version de la vanne à clapets selon l'invention équipée d'une membrane élastique sollicitée par un piston.

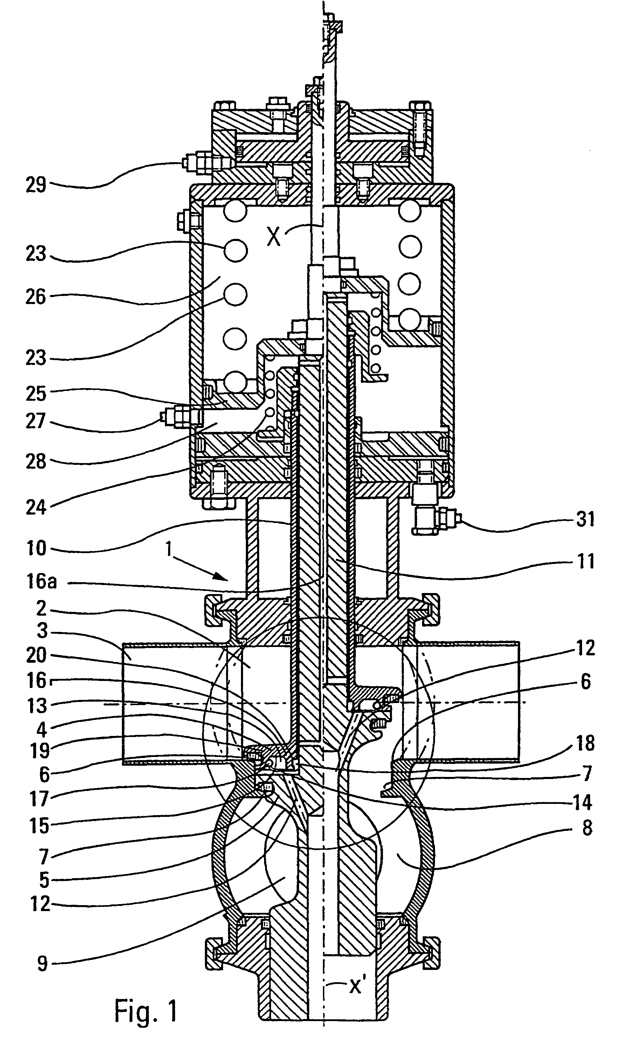

Dans la réalisation de la figure 1, la vanne à clapets comprend un corps 1 comportant une chambre 2 communiquant avec deux conduits latéraux 3.

Deux clapets superposés 4, 5 sont mobiles dans la chambre 2 suivant un axe commun X-X' perpendiculaire aux deux conduits latéraux 3.

La partie inférieure de la chambre 2 comporte un premier siège 6 pour le clapet supérieur 4 et un deuxième siège 7 disposé à une certaine distance du premier siège 6, pour le clapet inférieur 5.

Par ailleurs, le corps 1 de la vanne comporte une deuxième chambre 8 disposée sous les deux sièges 6, 7 précités dans laquelle débouche un troisième conduit 9.

Les clapets 4, 5 sont portés chacun par un balancier 10, 11 mobile entre une position dans laquelle le clapet 4, 5 prend appui de façon étanche sur le siège 6, 7 correspondant (voir partie gauche de la figure 1) et une position dans laquelle le clapet est espacé dudit siège (voir partie droite de la figure 1).

La figure 1 montre d'autre part que le balancier 11 du clapet inférieur 5 comporte un canal interne 12 qui débouche dans un espace 13 compris entre les deux clapets 4, 5.

Conformément à l'invention, l'espace 13 compris entre les deux clapets 4, 5 comprend une membrane 14 en matière élastique fermant une chambre 15 dans laquelle débouche une arrivée 16 d'air sous pression, de telle sorte que la membrane 14 puisse gonfler et s'appliquer de façon étanche sur le clapet inférieur 5 pour obturer de façon étanche l'entrée du canal 12, comme indiqué sur la partie droite de la figure 1.

On voit également sur la figure 1 que la chambre 15 fermée par la membrane élastique 14 est ménagée dans la surface inférieure du clapet supérieur 4 et que l'une des extrémités de la membrane 14 est fixée au clapet supérieur 4.

Par ailleurs, les deux extrémités de la membrane 14 portent des talons 17, 18 encastrés dans des gorges 19, 20.

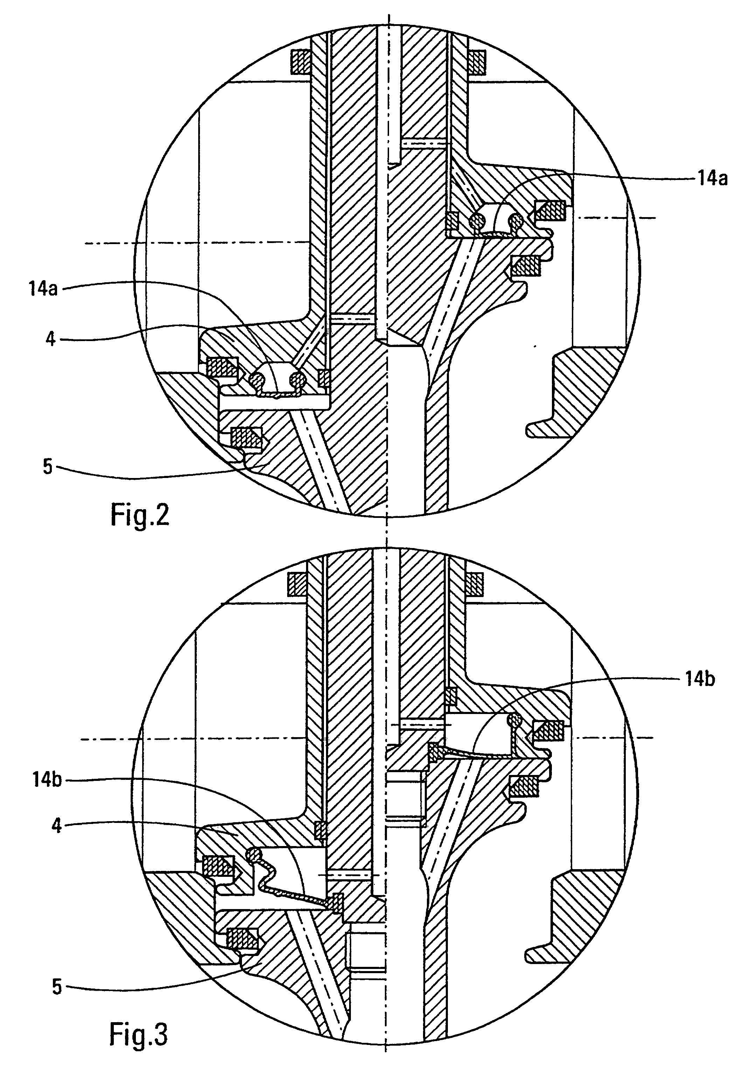

Dans l'exemple des figures 1 et 2, les deux extrémités de la membrane 14, 14a sont fixées au clapet supérieur 4.

Dans l'exemple de la figure 1, l'un 18 des talons de la membrane 14 forme un joint d'étanchéité entre le balancier 10 du clapet supérieur 4 et le balancier 11 du clapet inférieur 5.

Dans les exemples des figures 3, 4, 5, l'une des extrémités de la membrane 14b, 14c, 14d est fixée au balancier 11 du clapet inférieur 5 près de la surface supérieure de celui-ci.

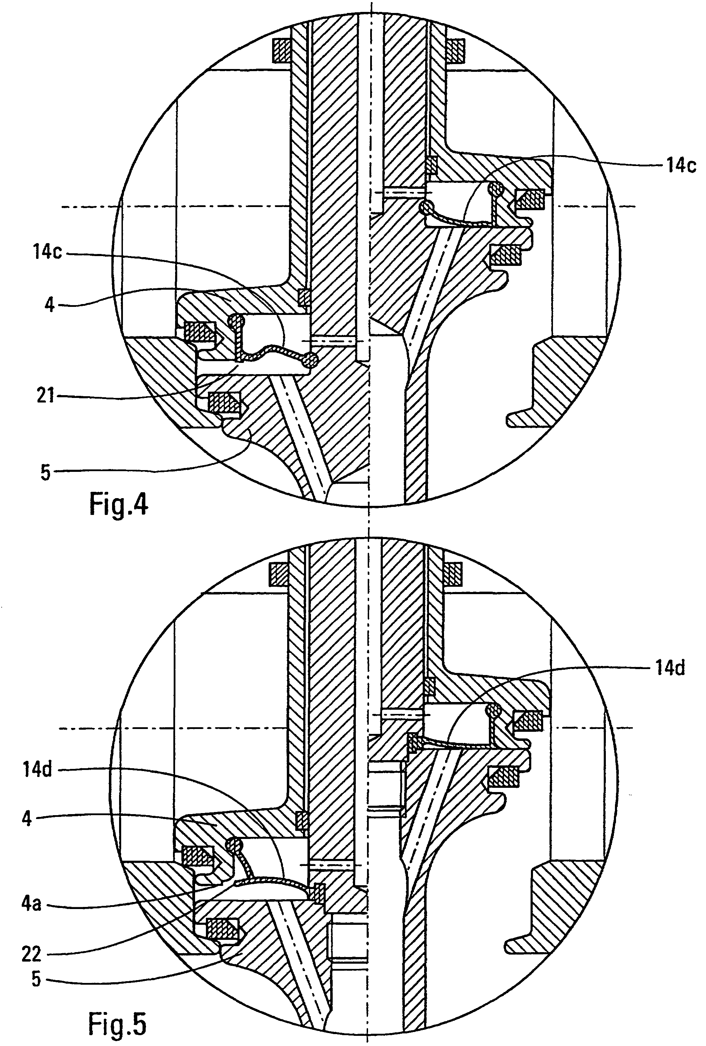

Dans l'exemple de la figure 4, la membrane 14c comporte un bourrelet 21 prenant appui sur la surface supérieure du clapet inférieur 5 lorsque la membrane 14c est gonflée par l'air sous pression.

Dans l'exemple de la figure 5, le bourrelet 22 est adapté pour venir s'insérer de façon étanche entre le bord inférieur 4a du clapet supérieur 4 et le bord supérieur du clapet inférieur 5 lorsque la membrane 14d est gonflée par l'air sous pression.

La figure 1 montre, d'autre part, que l'arrivée d'air sous pression 16 qui débouche dans la chambre 15 fermée par la membrane 14 est reliée à un canal axial 16a ménagé dans le balancier 11 du clapet inférieur 5.

Par ailleurs, les clapets 4, 5 sont maintenus en position fermée en appui sur leur siège correspondant 6, 7 par des ressorts 23, 24 prenant appui sur les extrémités supérieures des balanciers 10, 11 des clapets 4, 5.

L'extrémité supérieure du balancier 11 du clapet inférieur porte un piston 25 mobile dans une chambre cylindrique 26.

Une arrivée d'air sous pression 27 est prévue dans un espace 28 situé sous le piston 25 pour déplacer celui-ci vers la position d'ouverture des clapets 4, 5.

On voit également sur la figure 1, que le canal axial 16a ménagé dans le balancier 11 du clapet inférieur 5 débouche à l'extrémité supérieure de ce balancier dans l'espace 28 dans lequel débouche l'arrivée d'air sous pression 27.

Ainsi, lorsque l'air sous pression commande le déplacement du piston 25 vers la position d'ouverture des clapets 4, 5, l'air sous pression pénètre dans le canal 16a, puis dans la chambre 15 et gonfle la membrane 14.

On va maintenant expliquer le fonctionnement de la vanne à clapets que l'on vient de décrire.

Pour commander l'ouverture des clapets 4, 5, on injecte de l'air sous pression par l'ouverture 27 qui débouche dans l'espace 28.

L'air sous pression déplace le piston 25 contre l'action du ressort 23. Le déplacement du piston 25 entraîne le balancier 11 du clapet inférieur 5. Sous l'effet du ressort 24, le balancier 10 et le clapet correspondant 4 suivent le déplacement du balancier 11 et du clapet 5.

L'air sous pression injecté dans l'espace 28 pénètre dans le canal radial 16b, puis dans le canal 16a qui débouche dans la chambre 15 grâce au conduit 16.

L'air sous pression en remplissant la chambre 15 provoque le gonflement de la membrane 14 qui de ce fait s'appuie de façon étanche sur la surface supérieure du clapet inférieur 5.

Ainsi, aucune fuite de produit ne peut avoir lieu par le canal 12, lors du déplacement des clapets 4, 5 vers leur position d'ouverture.

Pour nettoyer les joints des clapets 4, 5, il est possible de réaliser un battement de ces clapets sur leur siège 6, 7.

Ainsi pour réaliser le battement du clapet inférieur 5, il suffit d'insuffler de l'air sous pression dans l'ouverture 29, ce qui provoque le déplacement du piston 30 qui entraîne le balancier 11 du clapet 5.

De même, pour réaliser le battement du clapet supérieur 4, il suffit d'insuffler de l'air sous pression dans l'ouverture 31, ce qui provoque le déplacement du piston 32 qui entraîne le balancier 10 du clapet 4.

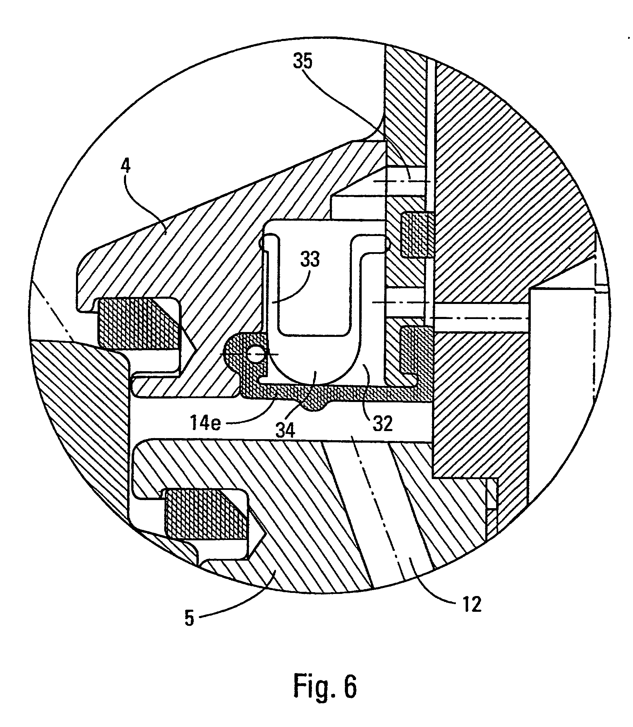

Dans la réalisation de la figure 6, la chambre 32 est fermée par une membrane élastique 14e. A l'intérieur de cette chambre 32 est logé de façon coulissante un piston 33 dont une extrémité 34 est en contact avec la membrane élastique 14e.

L'arrivée d'air sous pression 35 débouche à l'extrémité de la chambre 32 opposée à la membrane 14e.

Comme montré par la figure 6, le piston 33 a une section sensiblement en U, la base 34 en U étant en contact avec la membrane 14e par une surface arrondie qui est sphérique dans l'exemple représenté.

Le piston 33 est de préférence en polytétrafluoréthylène.

Le fonctionnement de la vanne à clapets selon la figure 6 est identique à celle selon la figure 1.

Lors de l'ouverture des clapets 4, 5, de l'air sous pression arrive dans la chambre 32. Toutefois, l'air sous pression, au lieu d'agir directement sur la membrane 14e, commande le déplacement du piston 33 qui de ce fait déforme la membrane 14e en la poussant vers le clapet 5.

Du fait de sa forme, le piston 33 agit comme un multiplicateur de pression, pour solliciter la membrane 14e sous une pression supérieure à celle existant dans la chambre 32 en l'absence du piston 33.

Il en résulte une amélioration de l'étanchéité entre les clapets 4 et 5.

## Revendications

1. Vanne à clapets comprenant un corps (1) comportant une chambre (2) communiquant avec deux conduits latéraux (3), deux clapets (4, 5) superposés étant mobiles dans ladite chambre (2) suivant un axe commun (X-X') perpendiculaire aux deux conduits latéraux (3), la partie inférieure de la chambre (2) comportant un premier siège (6) pour le clapet supérieur (4) et un deuxième siège (7) disposé à une certaine distance du premier siège (6), pour le clapet inférieur (5), le corps (1) de la vanne comportant une deuxième chambre (8) disposée sous les deux sièges (4, 5) précités dans laquelle débouche un troisième conduit (9), les clapets (4, 5) étant portés chacun par un balancier (10, 11) mobile entre une position dans laquelle le clapet (4, 5) prend appui de façon étanche sur le siège correspondant (6, 7) et une position dans laquelle le clapet (4, 5) est espacé dudit siège (6, 7), le balancier (11) du clapet inférieur (5) comportant un canal interne (12) qui débouche dans un espace (13) compris entre les deux clapets (4, 5) l'espace (13) compris entre les deux clapets (4, 5) comprenant un élément d'étanchéité (14, 14a, 14b, 14c,14d) fermant une chambre (15) dans laquelle débouche une arrivée (16) d'air sous pression, de telle sorte que l'élément d'étanchéité puisse s'appliquer de façon étanche sur le clapet inférieur (5) pour obturer de façon étanche l'entrée dudit canal (12), la vanne étant **caractérisée en ce que** :
- les balanciers (10, 11), et donc les clapets (4, 5), sont mobiles axialement (XX') respectivement indépendamment l'un de l'autre, et
- l'élément d'étanchéité (14, 14a, 14b, 14c, 14d) est une membrane en matière élastique qui, lors de l'ouverture des clapets, est gonflée par l'alimentation en air de la chambre (15), pour assurer alors ladite étanchéité sur le clapet inférieur (5).

2. Vanne conforme à la revendication 1, **caractérisée en ce que** le déplacement des balanciers (10, 11) l'un vis-à-vis de l'autre et l'alimentation en air de la chambre (15), via l'arrivée d'air (16), sont coordonnés de manière que la membrane élastique (14, 14a, 14b, 14c, 14d) obture l'entrée dudit canal (12) lors du déplacement des clapets vers leur position d'ouverture et lorsque le clapet supérieur (4) et le clapet inférieur (5) sont axialement à la fois rapprochés l'un de l'autre et chacun écartés du siège (6, 7) qui lui correspond.

3. Vanne conforme à la revendication 1 ou 2, **caractérisée en ce que** ladite chambre (15) fermée par la membrane élastique (14, 14a, 14b, 14c, 14d) est ménagée dans la surface inférieure du clapet supérieur (4), au moins l'une des extrémités de la membrane (14, 14a, 14b, 14c, 14d) étant fixée au clapet supérieur (4).

4. Vanne conforme à la revendication 3, **caractérisée en ce que** les deux extrémités de la membrane (14, 14a, 14b, 14c, 14d) portent des talons (17, 18) encastrés dans des gorges (19, 20).

5. Vanne conforme à l'une des revendications 3 ou 4, **caractérisée en ce que** les deux extrémités de la membrane (14, 14a) sont fixées au clapet supérieur (4).

6. Vanne conforme à l'une des revendications 4 ou 5, **caractérisée en ce que** l'un (18) des talons de la membrane (14) forme un joint d'étanchéité entre le balancier (10) du clapet supérieur (4) et le balancier (11) du clapet inférieur (5).

7. Vanne conforme à l'une des revendications 3 ou 4, **caractérisée en ce que** l'une des extrémités de la membrane (14b, 14c, 14d) est fixée au balancier (11) du clapet inférieur (5) près de la surface supérieure de celui-ci.

8. Vanne conforme à la revendication 7, **caractérisée en ce que** la membrane (14c, 14d) comporte un bourrelet (21, 22) prenant appui sur la surface supérieure du clapet inférieur (5) lorsque la membrane (14c, 14d) est gonflée par l'air sous pression

9. Vanne conforme à la revendication 8, **caractérisée en ce que** le bourrelet (22) est adapté pour venir s'insérer de façon étanche entre le bord inférieur (4a) du clapet supérieur (4) et le bord supérieur du clapet inférieur (5) lorsque la membrane (14d) est gonflée par l'air sous pression.

10. Vanne conforme à l'une des revendications 1 à 9, **caractérisée en ce que** l'arrivée d'air sous pression (16) qui débouche dans ladite chambre (15) fermée par la membrane (14, 14a, 14b, 14c, 14d) est reliée à un canal axial (16a) ménagé dans le balancier (11) du clapet inférieur (5).

11. Vanne conforme à l'une des revendications 1 à 10, **caractérisée en ce que** les clapets (4, 5) sont maintenus en position fermée en appui sur leur siège correspondant (6, 7) par des ressorts (23, 24) prenant appui sur les extrémités supérieures des balanciers (10, 11) desdits clapets, l'extrémité supérieure du balancier (11) du clapet inférieur (5) portant un piston (25) mobile dans une chambre cylindrique (26), une arrivée (27) d'air sous pression étant prévue dans un espace (28) situé sous le piston (25) pour déplacer celui-ci vers la position d'ouverture des clapets (4, 5).

12. Vanne conforme aux revendications 10 et 11, **caractérisée en ce que** le canal axial (16a) ménagé dans le balancier (11) du clapet inférieur (5) débouche à l'extrémité supérieure de ce balancier dans l'espace (28) dans lequel débouche l'arrivée d'air sous pression (27), de telle sorte que lorsque l'air sous pression commande le déplacement du piston (25) vers la position d'ouverture des clapets (4, 5) l'air sous pression pénètre dans ledit canal (16a), puis dans ladite chambre (15) et gonfle ladite membrane (14, 14a, 14b, 14c, 14d).

13. Vanne conforme à l'une des revendications 1 à 12, **caractérisée en ce qu'**à l'intérieur de la chambre est logé de façon coulissante un piston dont une extrémité est en contact avec la membrane élastique, l'arrivée d'air sous pression débouchant à l'extrémité de la chambre opposée à ladite membrane.

14. Vanne conforme à la revendication 13, **caractérisée en ce que** le piston a une section sensiblement en U, la base du U étant en contact avec ladite membrane.

15. Vanne conforme à l'une des revendications 13 ou 14, **caractérisé en ce que** l'extrémité du piston en contact avec la membrane, est arrondie.

## Claims

1. Flap valve containing a body (1) comprising a chamber (2) communicating with two lateral conduits (3), two flaps (4, 5), placed one above the other, being movable in the said chamber (2) along a common axis (X-X') perpendicular to the two lateral conduits (3), the lower part of the chamber (2) comprising a first seat (6) for the upper flap (4) and a second seat (7), disposed at a certain distance from the first seat (6), for the lower flap (5), the body (1) of the valve comprising a second chamber (8), disposed beneath the two aforesaid seats (4, 5), in which a third conduit (9) emerges, the flaps (4, 5) each being supported by a rocker arm (10, 11) movable between a position in which the flap (4, 5) bears in a leak-tight manner upon the corresponding seat (6, 7) and a position in which the flap (4, 5) is spaced apart from the said seat (6, 7), the rocker arm (11) of the lower flap (5) comprising an inner duct (12) which emerges in a space (13) contained between the two flaps (4, 5), the space (13) contained between the two flaps (4, 5) containing a sealing element (14, 14a, 14b, 14c, 14d) closing a chamber (15) in which a pressurized-air intake (16) emerges, such that the sealing element can apply itself in a leak-tight manner to the lower flap (5) in order to seal off the inlet of the said duct (12), the valve being **characterized in that**:
- the rocker arms (10, 11), and hence the flaps (4, 5), can be moved axially (XX') in respective independence from one another, and
- the sealing element (14, 14a, 14b, 14c, 14d) is a membrane made of elastic material, which membrane, as the flaps are opened, is inflated by the air supply to the chamber (15) in order then to ensure the said seal on the lower flap (5).

2. Valve according to Claim 1, **characterized in that** the mutual displacement of the rocker arms (10, 11) and the air supply to the chamber (15), via the air intake (16), are coordinated in such a way that the elastic membrane (14, 14a, 14b, 14c, 14d) shuts off the inlet of the said duct (12) upon the displacement of the flaps towards their opening position and when the upper flap (4) and the lower flap (5) are brought axially closer together and, at the same time, each spaced apart from their respectively corresponding seat (6, 7).

3. Valve according to Claim 1 or 2, **characterized in that** the said chamber (15) closed by the elastic membrane (14, 14a, 14b, 14c, 14d) is arranged in the bottom surface of the upper flap (4), at least one of the ends of the membrane (14, 14a, 14b, 14c, 14d) being fixed to the upper flap (4).

4. Valve according to Claim 3, **characterized in that** the two ends of the membrane (14, 14a, 14b, 14c, 14d) bear heels (17, 18) embedded in grooves (19, 20).

5. Valve according to either of Claims 3 and 4, **characterized in that** the two ends of the membrane (14, 14a) are fixed to the upper flap (4).

6. Valve according to either of Claims 4 and 5, **characterized in that** one (18) of the heels of the membrane (14) forms a sealing joint between the rocker arm (10) of the upper flap (4) and the rocker arm (11) of the lower flap (5).

7. Valve according to either of Claims 3 and 4, **characterized in that** one of the ends of the membrane (14b, 14c, 14d) is fixed to the rocker arm (11) of the lower flap (5) close to the top surface of the latter.

8. Valve according to Claim 7, **characterized in that** the membrane (14c, 14d) comprises a flange (21, 22) bearing upon the top surface of the lower flap (5) when the membrane (14c, 14d) is inflated by the pressurized air.

9. Valve according to Claim 8, **characterized in that** the flange (22) is designed to insert itself in a leak-tight manner between the bottom edge (4a) of the upper flap (4) and the top edge of the lower flap (5) when the membrane (14d) is inflated by the pressurized air.

10. Valve according to one of Claims 1 to 9, **characterized in that** the pressurized-air intake (16) which emerges in the said chamber (15) closed by the membrane (14, 14a, 14b, 14c, 14d) is connected to an axial duct (16a) arranged in the rocker arm (11) of the lower flap (5).

11. Valve according to one of Claims 1 to 10, **characterized in that** the flaps (4, 5) are held in the closed position, resting upon their corresponding seat (6, 7), by springs (23, 24) bearing upon the top ends of the rocker arms (10, 11) of the said flaps, the top end of the rocker arm (11) of the lower flap (5) supporting a piston (25) movable in a cylindrical chamber (26), a pressurized-air intake (27) being provided in a space (28) situated beneath the piston (25) so as to displace the latter towards the opening position of the flaps (4, 5).

12. Valve according to Claims 10 and 11, **characterized in that** the axial duct (16a) arranged in the rocker arm (11) of the lower flap (5) emerges at the top end of this rocker arm in the space (28) in which the pressurized-air intake (27) emerges, such that when the pressurized air actuates the displacement of the piston (25) towards the opening position of the flaps (4, 5), the pressurized air penetrates into the said duct (16a), then into the said chamber (15), and inflates the said membrane (14, 14a, 14b, 14c, 14d).

13. Valve according to one of Claims 1 to 12, **characterized in that** a piston is accommodated in sliding arrangement inside the chamber, one end of which piston is in contact with the elastic membrane, the pressurized-air intake emerging at the end of the chamber opposite the said membrane.

14. Valve according to Claim 13, **characterized in that** the piston has a substantially U-shaped section, the base of the U being in contact with the said membrane.

15. Valve according to either of Claims 13 and 14, **characterized in that** the end of the piston in contact with the membrane is rounded.

## Patentansprüche

1. Ventilklappe mit einem Gehäuse (1), mit einer Kammer (2), die mit zwei Querleitungen (3) in Verbindung steht, zwei übereinander angeordneten Klappen (4, 5), die in der Kammer (2) um eine gemeinsame Achse (X-X') senkrecht zu den zwei Querleitungen (3) beweglich sind, wobei der untere Teil der Kammer (2) einen ersten Sitz (6) für die obere Klappe (4) und einen in einem gewissen Abstand von dem ersten Sitz (6) angeordneten zweiten Sitz (7) für die untere Klappe (5) aufweist, wobei das Gehäuse (1) des Ventils eine zweite Kammer (8) aufweist, die unter den zwei vorgenannten Sitzen (4, 5) angeordnet ist, in welcher eine dritte Leitung (9) mündet, wobei die Klappen (4, 5) jeweils an einem Ausgleichselement (10, 11) abgestützt sind, das beweglich ist zwischen einer Position, in welcher die Klappe (4, 5) in dichter Weise an dem zugehörigen Sitz (6, 7) anliegt, und einer Position, in welcher die Klappe (4, 5) in Abstand zu dem Sitz (6, 7) liegt, wobei das Ausgleichselement (11) der unteren Klappe (5) einen Innenkanal (12) aufweist, der in einen Raum (13) zwischen den zwei Klappen (4, 5) mündet, wobei der Raum (13) zwischen den zwei Klappen (4, 5) ein Dichtungselement (14, 14a, 14b, 14c, 14d) aufweist, welches eine Kammer (15) schließt, in welcher ein Zugang (16) für Druckluft mündet, derart, dass das Dichtungselement sich in dichter Weise auf die untere Klappe (5) legen kann, um den Eingang des Kanals (12) in dichter Weise zu verschließen, wobei das Ventil **dadurch gekennzeichnet ist, dass**:
- die Ausgleichselemente (10, 11) und somit die Klappen (4, 5) jeweils unabhängig voneinander axial (XX') beweglich sind, und
- das Dichtungselement (14, 14a, 14b, 14c, 14d) eine Membran aus elastischen Material ist, die bei Öffnung der Klappen durch Luftzuführung aus der Kammer (15) aufgebläht wird, um dann die Dichtigkeit auf der unteren Klappe (5) sicherzustellen.

2. Ventil nach Anspruch 1,
**dadurch gekennzeichnet,**
**dass** die Verschiebung der Ausgleichselemente (10, 11) gegeneinander und die Luftzufuhr aus der Kammer (15) über den Luftzugang (16) in der Weise koordiniert sind, dass die elastische Membran (14, 14a, 14b, 14c, 14d) den Eingang des Kanals (12) schließt, bei der Verschiebung der Klappen in Richtung ihrer Öffnungsposition und während die obere Klappe (4) und die untere Klappe (5) sowohl axial zueinander hingerückt als auch aus dem ihnen jeweils zugehörigen Sitz (6, 7) weggerückt sind.

3. Ventil nach Anspruch 1 oder 2,
**dadurch gekennzeichnet,**
**dass** die Kammer (15), die durch die elastische Membran (14, 14a, 14b, 14c, 14d) geschlossen ist, in der inneren Oberfläche der oberen Klappe (4) ausgebildet ist, wobei wenigstens eines der Enden der Membran (14, 14a, 14b, 14c, 14d) an der oberen Klappe (4) befestigt ist.

4. Ventil nach Anspruch 3,
**dadurch gekennzeichnet,**
**dass** die zwei Enden der Membran (14, 14a, 14b, 14c, 14d) Endstücke (17, 18) tragen, die in Hohlkehlen (19, 20) eingefügt sind.

5. Ventil nach einem der Ansprüche 3 oder 4,
**dadurch gekennzeichnet,**
**dass** die zwei Enden der Membran (14, 14a) an der oberen Klappe (4) befestigt sind.

6. Ventil nach einem der Ansprüche 4 oder 5,
**dadurch gekennzeichnet,**
**dass** eines (18) der Endstücke der Membran (14) eine Dichtungsstelle zwischen dem Ausgleichselement (10) der oberen Klappe (4) und dem Ausgleichselement (11) der unteren Klappe (5) bildet.

7. Ventil nach einem der Ansprüche 3 oder 4,
**dadurch gekennzeichnet,**
**dass** eines der Enden der Membran (14b, 14c, 14d) an dem Ausgleichselement (11) der unteren Klappe (5) nahe der oberen Oberfläche derselben befestigt ist.

8. Ventil nach Anspruch 7,
**dadurch gekennzeichnet,**
**dass** die Membran (14c, 14d) eine Wulst (21, 22) aufweist, die an der oberen Oberfläche der unteren Klappe (5) anliegt, wenn die Membran (14c, 14d) durch Druckluft aufgebläht ist.

9. Ventil nach Anspruch 8,
**dadurch gekennzeichnet,**
**dass** die Wulst (22) so ausgebildet ist, dass diese in dichter Weise zwischen dem unteren Rand (4a) der oberen Klappe (4) und dem oberen Rand der unteren Klappe (5) eingeführt wird, wenn die Membran (14d) durch Druckluft aufgebläht wird.

10. Ventil nach einem der Ansprüche 1 bis 9,
**dadurch gekennzeichnet,**
**dass** der Druckluft-Zugang (16), der in der Kammer (15) mündet, die durch die Membran (14, 14a, 14b, 14c, 14d) verschlossen ist, mit einem axialen Kanal (16a) zu verbunden ist, der in dem Ausgleichselement (11) der unteren Klappe (5) ausgebildet ist.

11. Ventil nach einem der Ansprüche 1 bis 10,
**dadurch gekennzeichnet,**
**dass** die Klappen (4, 5) durch Federn (23, 24) in einer geschlossenen Position in Anlage an ihrem zugehörigen Sitz (6, 7) gehalten werden, die an die oberen Enden der Ausgleichselemente (10, 11) der Klappen angreifen, wobei das obere Ende des Ausgleichselements (11) der unteren Klappe (5) einen Kolben (25) trägt, der in einer Zylinderkammer (26) beweglich ist, wobei ein Zugang (27) für Druckluft in einem Raum (28) vorgesehen ist, der unter dem Kolben (25) liegt, um diesen in Richtung der Öffnungsposition der Klappen (4, 5) zu verschieben.

12. Ventil nach den Ansprüchen 10 und 11,
**dadurch gekennzeichnet,**
**dass** der axiale Kanal (16a), der in dem Ausgleichselement (11) der unteren Klappe (5) ausgebildet ist, am oberen Ende dieses Ausgleichselements in dem Raum (28) mündet, in welchem der Zugang für die Druckluft (27) mündet, derart, dass, wenn Druckluft die Verschiebung des Kolbens (25) in Richtung der Öffnungsposition der Klappen (4, 5) steuert, Druckluft in den Kanal (16a) und die Kammer (15) eindringt und die Membran (14, 14a, 14b, 14c, 14d) aufbläht.

13. Ventil nach einem der Ansprüche 1 bis 12,
**dadurch gekennzeichnet,**
**dass** im Inneren der Kammer ein Kolben in verschiebbarer Weise aufgenommen ist, dessen eines Ende in Kontakt mit der elastischen Membran steht, wobei der Zugang für die Druckluft an dem Membran entgegengesetzten Ende der Kammer mündet.

14. Ventil nach Anspruch 13,
**dadurch gekennzeichnet,**
**dass** der Kolben einen im wesentlichen U-Querschnitt aufweist, wobei die Basis des U in Kontakt mit der Membran steht.

15. Ventil nach einem der Ansprüche 13 oder 14,
**dadurch gekennzeichnet,**
**dass** das Ende des Kolbens, dass sich in Kontakt mit der Membran befindet, abgerundet ist.
